# EUROPÄISCHE PATENTANMELDUNG

(11) **EP 0 823 411 A1**
(43) Veröffentlichungstag der Anmeldung: **11.02.1998**
(21) Anmeldenummer: 96610029.9
(22) Anmeldetag: 09.08.1996
(51) Int. Cl.: C05G 3/00

(54) **Wässrige Zusammensetzung, Verfahren zu ihrer Herstellung sowie Anwendung der Zusammensetzung als Antimoos-Rasendünger**

(71) Anmelder: DanGödning A/S, 7000 Fredericia (DK)
(72) Erfinder: Andersen, Ove, DK-8990 Faarup (DK)
(74) Vertreter: Rotne, Jens Styrup

(57) **Zusammenfassung**

Eine wässrige Zusammensetzung umfassend Harnstoff, Ammoniak, Polyphosphat, Schwefelsäure, Kalium in näher angegebenen Mengen sowie gegebenenfalls Spurenmengen von Natrium und Kalium führt zu Verwelken von Moosen in Rasen, wobei die Moose anstelle des Schwarzfärbens, das nach Behandlung mit Eisenvitriol auftritt, eine mehr ästhetisch freundliche hellgrüne Farbe annehmen. Gleichzeitig führt die Zusammensetzung den Gräsern notwendige Makro- und Mikronährstoffe zu und macht hierdurch die Zufuhr von festen Rasendüngern im wesentlichen überflüssig.

Die Zusammensetzung wird durch Auflösen von Quellen der erwähnten Grundstoffe in Wasser hergestellt. Sie findet Anwendung als Antimoos-Rasendünger.

## Beschreibung

Die Erfindung betrifft eine wässrige Zusammensetzung umfassend Harnstoff, Ammoniak, Polyphosphat, Schwefelsäure und eine Kaliumverbindung sowie Spurenmengen einer Mangan- und einer Kupferverbindung. Die Erfindung betrifft ferner ein Verfahren zur Herstellung einer solchen Zusammensetzung sowie Anwendung der Zusammensetzung als Antimoos-Rasendünger.

Als Moosbekämpfungsmittel in Rasen werden zur Zeit überwiegend Eisenvitriol, d.h. Eisen(II)sulfat, Heptahydrat verwendet. Diese Mittel bewirken ein effektives Verwelken von Moos in Rasen, weisen aber den Nachteil auf, dass die verwelkten Moose als dunkle, nahezu schwarze Flecken aufscheinen. Die Gräser sind imstande den zugeführten Schwefel auszunützen, während das Eisen mit Hinblick auf Dünger keinen Wert hat.

Es würde vorteilhaft sein ein Moosbekämpfungsmittel zur Verfügung zu haben, das verwelktem Moos ein mehr ästetisches Aussehen verleiht und gleichzeitig ganz oder teilweise üblichen Rasendünger erstatten könnte, wobei das Mittel weder organische Unkrautsgifte für Moosbekämpfung oder Stoffe enthalten sollte, die von Grasarten nicht als Dünger ausgenutzt werden können oder mit Hinblick auf die Umwelt bedenklich sein könnten.

Nach einer langen Reihe von Tests verschiedener wässriger Zubereitungen und Lösungen fand man eine optimale Zusammensetzung von wichtigen Makro- und Mikronährstoffen, die zu einem raschen Welken von Moos führte, wo aber die verwelkten Moose nicht schwarz aussehend, sondern hellgrün waren und somit nicht verunzierend von der Farbe des grünen Grases abwichen.

In Übereinstimmung damit ist die erfindungsgemässe wässrige Zusammensetzung dadurch gekennzeichnet, dass 100 kg fertige Zusammensetzung
8,5 - 9,5 kg Stickstoff,
0,6 - 0,8 kg Phosphor,
4,5 - 5,5 kg Kalium,
2,5 - 3,5 kg Schwefel,
0,001 - 0,004 kg Mangan, und
0,01 - 0,05 kg Kupfer,
in jedem Fall berechnet auf Basis der Grundstoffe, umfasst.

Die Vorteile bei der wässrigen Zusammensetzung nach der Erfindung sind gegenüber Eisenvitriol, folgende:
- Düngen und Moosbekämpfung erfolgen in demselbem Arbeitsgang,
- anstelle von hässlichem schwarz werden die welken Moose hellgrün,
- in der Zusammensetzung befinden sich sowohl Makroals Mikronährstoffe,
- die Zusammensetzung ist sofort zum Gebrauch bereit und muss nicht aufgelöst werden, und
- die genau dosierte Zusammensetzung kann mit einer Handspritze, oder anderenfalls bei kleineren Rasen, mit einer mit einer Brause versehenen Wasserkanne verteilt werden.

Im Verhältnis zu festen Rasendüngern - die im wesentlichen überflüssig werden - weist die erfindungsgemässe Zusammensetzung folgende Vorteile auf:
- Da die Phosphatquelle Polyphosphat ist, von dem man weiss, dass es fünfzigmal weniger Cd als übliche Phosphatquellen enthält, ist die Zusammensetzung ausserordentlich arm an Kadmium,
- rasche Wirkung,
- kein Versengen von Gras, und
- behandelte Flächen können unmittelbar danach ohne Behinderung von Publikum betreten werden.

Vorzugsweise enthält die erfindungsgemässe wässrige Zusammensetzung
8,7 - 9,1 kg Stickstoff,
0,67 - 0,73 kg Phosphor,
4,8 - 5,2 kg Kalium,
2,8 - 3,2 kg Schwefel,
0,0015 - 0,0025 kg Mangan, und
0,025 - 0,035 kg Kupfer,
in jedem Fall berechnet auf Basis der Grundstoffe.

Die erfindungsgemässe wässrige Zusammensetzung ist eine klare, nahezu farblose wässrige Flüssigkeit mit einer Dichte von ungefähr 1,19 kg/m³. Sie ist sauer, da ihr pH-Wert im Bereich von 0,85 liegt, und sie ist recht ungefährlich zu hantieren, wobei Spritze auf das Gewand, die Haut und insbesondere in die Augen natürlich sofort mit Wasser wegzuspülen sind.

Wie vorstehend erwähnt, liegt Phosphor in der wässrigen Zusammensetzung gemäss der Lösung in Polyphosphat/Polyphosphatsäureform vor, weil dadurch Verseuchung mit dem unerwünschten Schwermetall Kadmium in hohem Mass reduziert wird, und Stickstoff kommt aus Gründen des Umweltschutzes im wesentlichen nicht in Nitratform vor. Ferner kann Ammoniumpolyphosphat bequem eine gemeinsame Quelle für Ammoniak-Stickstoff und für Polyphosphat sein.

In Übereinstimmung damit ist eine bevorzugte Ausführungsform der wässrigen Zusammensetzung nach der Erfindung dadurch gekennzeichnet, dass die Menge von Ammoniak-Stickstoff von der Phosphormenge abhängt, entsprechend dem, dass als Phosphorquelle Ammoniumpolyphosphat benutzt ist, und das die restliche Stickstoffmenge im wesentlichen als Amidstickstoff vorhanden ist.

Als Quelle für Mangan wird in der erfindungsgemässen Zusammensetzung vorzugsweise Mangansulfat, Heptahydrat, ferner für Kupfer Kupfersulfat, Pentahydrat und für Kalium Kaliumchlorid benutzt.

Die erfindungsgemässe Zusammensetzung wird bei einem Verfahren erzeugt, das aus einem einfachen Zusammenmischen der Bestandteile besteht, wobei man in einem umgerührten Mischbehälter die für die gewünschte Zusammensetzung entsprechenden Mengen der Quellen für Stickstoff, vorzugsweise im wesentlichen als Amid-Stickstoff und Ammoniak-Stickstoff, Phosphor, Schwefel, Kalium, sowie gegebenenfalls Mangan und Kupfer, in Wasser, vorzugsweise in warmem Wasser, auflöst und homogenisiert, und das fertige Produkt dem Behälter entnimmt.

Als erwähnte Quellen für Amid-Stickstoff, Ammoniak-Stickstoff, Phosphor, Schwefel, Kalium, Mangan und Kupfer werden vorzugsweise benutzt:
- für Amid-Stickstoff: Harnstoff,
- für Ammoniak-Stickstoff und für Polyphosphat: Ammonium-Polyphosphat (Cd-Inhalt unter 1 ppm berechnet auf P),
- für Schwefel: Schwefelsäure, besonders 96% konzentrierte Schwefelsäure,
- für Kalium: Kaliumchlorid,
- für Mangan: Mangansulfat, Heptahydrat, und
- für Kupfer: Kupfersulfat, Pentahydrat,
wobei alle erwähnte Quellen im Handel leicht erhältlich und von guter technischer Qualität sind.

Mehr detalliert gibt man in einen mit einem passenden Umrührer versehenen Mischbehälter die zu der gewünschten Zusammensetzung passende Menge von 40-75°C, insbesondere auf etwa 60°C erwärmtes Wasser und setzt unter Umrühren die der Zusammensetzung entsprechenden berechneten Mengen von Kaliumchlorid, Harnstoff, Ammoniumpolyphosphat , Mangan- und Kupfersulfat und schliesslich die konzentrierte Schwefelsäure zu. Nach Homogenisierung und Abkühlen kann das Produkt aus dem Behälter genommen und gelagert und/oder wird in passende Versand- oder Verkaufsemballagen gefüllt werden.

Wie vorstehend angeführt, werden die mit der erfindungsgemässen Zusammensetzung behandelten Moose effektiv welken, und die verwelkten Moose weisen eine hellgrüne Farbe auf. Gleichzeitig wird dem Rasen eine optimale Zusammensetzung wichtiger Makro- und Mikronährstoffe zugeführt, wodurch ein Zusetzen von festen Rasendüngern im wesentlichen überflüssig wird.

In Übereinstimmung damit betrifft die Erfindung ferner die Verwendung der erfindungsgemässen wässrigen Zusammensetzungen als Antimoos-Rasendünger.

Bei einer solchen Anwendung kann die erfindungsgemässe wässrige Zusammensetzung durch ein Bespritzen des Rasens in einer für den Fachmann bekannten Menge ausgetragen werden. Das Verteilen kann auch mit einer Handspritze erfolgen, sodass die Dosierung ganz genau vorgenommen werden kann. Schliesslich kann das Verteilen der Zusammensetzung auf kleineren Rasen einfach mit einer mit einer Brause versehenen Wasserkanne erfolgen.

Das Verteilen der erfindungsgemässen wässrigen Zusammensetzung auf einem Rasen wird vorteilhaft im zeitigen Frühjahr durchgeführt und nach Bedarf ein oder mehrere Male in Intervallen von 1-8 Wochen, beispielsweise 2 x mit einem Intervall von etwa 6 Wochen, wiederholt. Bei jedem Austragen wird z.B. 2-2,5 l der erdindungsgemässen Zusammensetzung pro m² Rasen dosiert. Die Menge pro Verteilung kann indes etwas grösser oder kleiner als die hier empfohlene Menge sein, da die in jedem einzelnen Fall erforderliche Menge vom Fachmann zu bestimmen ist.

Die Erfindung wird nachstehend anhand eines Herstellungs- und eines Testbeispiels näher erläutert werden.

### HERSTELLUNGSBEISPIEL

In einen mit einem Rührer versehenen Behälter von 15000 l wurde 6956 kg von im voraus auf 60°C erwärmtes Wasser gefüllt. Diesem setzte man unter Umrühren und Auflösen in Reihenfolge 1176 kg Kaliumchlorid, 2170 kg Harnstoff, 561 kg Ammoniumpolyphosphat, 750 g Mangansulfat, Heptahydrat, 14 kg Kupfersulfat und schliesslich (vorsichtig) 1122 kg 96% konzentrierter Schwefelsäure bei. Das fertige Produkt (12000 kg) wurde nach vollständigem Homogenisieren und Abkühlen auf Raumtemperatur aus dem Behälter genommen, und ergab eine klare, fast farblose wässrige Lösung mit einer Dichte von 1,19 kg/m³, einem pH-wert von 0,85 und einem Gehalt von 8,8 kg Stickstoff pro 100 kg fertiges Produkt, wovon 8,33 kg als Amid-Stickstoff, und der Rest, 0,47 kg, als Ammonium-Stickstoff, 0,7 kg Phosphor, 5,0 kg Kalium, 2,92 kg Schwefel, 0,002 kg Mn und 0,03 kg Cu vorhanden waren.

### TESTBEISPIEL

Eine erfindungsgemässe wässrige Zusammensetzung, die im wesentlichen nach dem obenstehenden Herstelbeispiel zusammengesetzt ist, wurde als Antimoos-Rasendünger in einem moosbewachsenen Rasen in einer grösseren Gartenanlage in der Umgebung von Kopenhagen benutzt. Über die genaue Zusammensetzung des Antimoos-Rasendüngers wurde nichts bekannt gegeben, jedoch wurde mitgeteilt, dass die Zusammensetzung keine organischen Pflanzenbekämpfungsmittel enthielt.

Das Testergebnis lag als ein Gutachten des Obergärtners vor, das wie folgt lautet:

Im zeitigen Frühjahr wurde nach Empfehlung der Firma der Rasen gedüngt (mit dem genannten Antimoos-Rasendünger), und im Laufe von wenigen Stunden zeigte sich auf den Moosen eine deutliche Wirkung. Die Wirkung kann als ein sehr rasches Austrocknen der Moose bezeichnet werden, und es war spannend zu beobachten, dass die Moose die Farbe wechselten von dunkelgrün zu sehr hellem grün, nahezu auf weissliche Farbtöne. Es bestand kein Zweifel, dass die Moose im Wachsen aufhörten, sogar recht schnell.

Etwa 2 Wochen nach dem Düngen wurde der Rasen mit einem Rasenlüfter vertikal gemäht und präsentierte sich danach in einer sehr schönen, grünen Farbe. Grosse Teile der Moose waren zu diesem Zeitpunkt ganz weggewelkt, und der Rest wurde mit Hilfe des Rasenlüfters entfernt. Etwa einen Monat später wurde die Behandlung wiederholt, und nach dieser Behandlung hatte der Rasen ein optimales Aussehen.

Unmittelbar nach dieser letzten Behandlung führte die Gartenanlage im Laufe von 14 Tage eine Reihe von Veranstaltungen mit bis zu 800 Personen täglich auf dem Rasen durch, und diese Belastung war im grossen und ganzen nicht am Gras des Rasens zu sehen.

Anschliessend trat eine langandauernde Sommertrockenheit ein, und trotz plötzlichem Temperaturanstieg verstrich lange Zeit bevor die Trockenheit auf dem Gras abzulesen war. Nach erneutem Regen später in der Saison vergingen nur 8-10 Tage, bevor der Rasen sein gesundes Aussehen zurückgewann. Dies ist nur möglich, wenn die Gräser eine gesunde Düngerkraft besitzen.

Als sehr positiv soll hervorgehoben werden, dass die auf die Moose ausgeübte Wirkung nicht auf einem zugesetzten Pflanzengift beruht, sondern ausschliesslich auf die Zusammensetzung der Nährstoffe zurückzuführen ist.

## Patentansprüche

1. Wässrige Zusammensetzung, umfassend Harnstoff, Ammoniak, Polyphosphat, Schwefelsäure und eine Kaliumverbindung sowie Spurenmengen einer Mangan- und einer Kupferverbindung, dadurch **gekennzeichnet**, dass 100 kg fertige Zusammensetzung
8,5 - 9,5 kg Stickstoff,
0,6 - 0,8 kg Phosphor,
4,5 - 5,5 kg Kalium,
2,5 - 3,5 kg Schwefel,
0,001 - 0,004 kg Mangan, und
0,01 - 0,05 kg Kupfer,
in jedem Fall berechnet auf Basis der Grundstoffe, umfasst.

2. Zusammensetzung nach Anspruch 1, dadurch **gekennzeichnet**, dass 100 kg fertige Zusammensetzung
8,7 - 9,1 kg Stickstoff,
0,67 - 0,73 kg Phosphor,
4,8 - 5,2 kg Kalium,
2,8 - 3,2 kg Schwefel,
0,0015 - 0,0025 kg Mangan, und
0,025 -0,035 kg Kupfer,
in jedem Fall berechnet auf Basis der Grundstoffe, umfasst.

3. Zusammensetzung nach Anspruch 1 oder 2, dadurch **gekennzeichnet**, dass der pH-Wert im Bereich von 0,85 ist.

4. Zusammensetzung nach Anspruch 1-3, dadurch **gekennzeichnet**, dass die Menge von Ammoniak-Stickstoff von der Phosphormenge abhängt, entsprechend dem, dass als Phosphorquelle Ammoniumpolyphosphat benutzt ist, und dass die restliche Menge von Stickstoff im wesentlichen als Amid-Stickstoff vorhanden ist.

5. Zusammensetzung nach Anspruch 4, dadurch **gekennzeichnet**, dass als Quelle für Mangan Mangansulfat, Heptahydrat, als Quelle für Kupfer Kupfersulfat, Pentahydrat und als Quelle für Kalium Kaliumchlorid benutzt ist.

6. Verfahren zur Herstellung einer Zusammensetzung nach Anspruch 1-5, dadurch **gekennzeichnet**, dass man in einem umgerührten Mischbehälter die der gewünschten Zusammensetzung entsprechenden Mengen der Quellen für Stickstoff, vorzugsweise im wesentlichen als Amid-Stickstoff und Ammoniak-Stickstoff, Phosphor, Schwefel, Kalium, Mangan und Kupfer in Wasser auflöst und homogenisiert und das fertige Produkt dem Behälter entnimmt.

7. Verfahren nach Anspruch 6, dadurch **gekennzeichnet**, dass man die erwähnten Quellen in Form von Harnstoff, Ammoniumpolyphosphat, Schwefelsäure, Kaliumchlorid, Mangansulfat, Heptahydrat und Kupfersulfat, Pentahydrat auflöst und homogenisiert.

8. Verwendung einer Zusammensetzung nach Anspruch 1-5 als Antimoos-Rasendünger.
